(19) Europäisches Patentamt
European Patent Office
Office européen des brevets

(11) **EP 3 707 798 B1**

(12) **EUROPÄISCHE PATENTSCHRIFT**

(45) Veröffentlichungstag und Bekanntmachung des Hinweises auf die Patenterteilung:
**10.11.2021 Patentblatt 2021/45**

(21) Anmeldenummer: **18833653.1**

(22) Anmeldetag: **20.12.2018**

(51) Int Cl.:
*H02J 3/46* (2006.01)    *H02J 13/00* (2006.01)

(86) Internationale Anmeldenummer:
**PCT/EP2018/086305**

(87) Internationale Veröffentlichungsnummer:
**WO 2019/149428 (08.08.2019 Gazette 2019/32)**

(54) **VERFAHREN ZUR REGELUNG EINES ELEKTRISCHEN LEISTUNGSTRANSFERS SOWIE STROMNETZ**

METHOD FOR REGULATING ELECTRIC POWER TRANSFER AND POWER NETWORK

METHODE POUR CONTROLER LE TRANSFERT DE PUISSANCE ELECTRIQUE ET RESEAU ELECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.01.2018 EP 18154173**

(43) Veröffentlichungstag der Anmeldung:
**16.09.2020 Patentblatt 2020/38**

(73) Patentinhaber: **Siemens Aktiengesellschaft 80333 München (DE)**

(72) Erfinder:
• CHAPOTARD, Victor
  80100 Abbeville (FR)
• NIESSEN, Stefan
  91056 Erlangen (DE)
• THIEM, Sebastian
  91413 Neustadt an der Aisch (DE)

(56) Entgegenhaltungen:
EP-A1- 2 908 400    US-A1- 2013 226 484

**Beschreibung**

Die Erfindung betrifft ein Verfahren zur Regelung eines elektrischen Leistungstransfers zwischen wenigstens zwei Strombereitstellungseinheiten und wenigstens einer Stromverbrauchseinheit. Weiterhin betrifft die Erfindung ein Stromnetz. Aufgrund einer zunehmenden Verwendung von verteilten Strombereitstellungseinheiten, die beispielsweise mit Stromverbrauchseinheiten ein Stromnetz ausbilden, ergeben sich neue Anforderungen an diese Stromnetze (englisch: Electric Grid). Die Strombereitstellungseinheiten speisen hierbei in das Stromnetz ein, sodass ihre elektrische Leistung für die Stromverbrauchseinheit bereitgestellt wird. Hierbei sind die Strombereitstellungseinheiten typischerweise räumlich weiträumig verteilt (dezentral). Beispielsweise ist in Deutschland ein Großteil der Windkraftanlagen im Norden angeordnet. Es ist daher erforderlich die mittels der Windkraftanlagen erzeugte elektrische Energie über ein Stromnetz in den Süden von Deutschland zu übertragen. Aufgrund dieser dezentralen Anordnung der Strombereitstellungseinheiten und gegebenenfalls der Stromverbrauchseinheiten ist eine Regelung erforderlich, die die Bereitstellung der elektrischen Leistung sowie ihren Verbrauch durch die Stromverbrauchseinheiten (Last) für jeden Zeitpunkt regelt, insbesondere balanciert.

Hierzu können die Stromnetze lokale Energiemärkte oder lokale Strombörsen ausbilden. Typischerweise weisen diese ebenfalls eine Verbindung zu einem übergeordneten Stromnetz, das heißt zu einem Großmarkt, auf. Insbesondere ist der Preis der elektrischen Energie (typischerweise Euro pro Kilowattstunde) für die verschiedenen Energiemärkte oder Strombörsen verschieden.

Zum Betrieb eines Energiemarktes oder einer Strombörse ist eine Regelung der Leistungstransfers zwischen den Strombereitstellungseinheiten und den Stromverbrauchseinheiten erforderlich. Die Regelung stellt hierbei sicher, dass das Angebot an elektrischer Energie der Nachfrage an elektrischer Energie entspricht, sodass das zugehörige Stromnetz stabil betrieben werden kann. Mit anderen Worten ist es erforderlich, dass zu jedem Zeitpunkt in etwa genauso viel elektrische Energie bereitgestellt wird, wie verbraucht wird. Hierzu weisen bekannte Energiemärkte oder Strombörsen eine Regelvorrichtung zum Regeln der Leistungstransfers zwischen den Strombereitstellungseinheiten und den Stromverbrauchseinheiten auf. Die Regelung der Leistungstransfers erfolgt hierbei lediglich basierend auf das Angebot und die Nachfrage an elektrischer Energie. Weiterhin können zur Regelung heuristische Verfahren vorgesehen sein.

EP 2908400 A1 offenbart ein Verfahren zur Regelung von Leistungstransfers zwischen mehreren Einheiten, die Strom bereitstellen (Strombereitstellungseinheiten) oder verbrauchen (Stromverbrauchseinheit). Hierzu wird basierend auf übermittelten Daten und den zugehörigen Informationen, die zu transferierende Leistung ermittelt.

Die Druckschrift US 2013/226484 A1 betrifft ein Verfahren zur Identifikation verschiedener Energieerzeuger, die elektrische Energie über ein Stromnetz austauschen.

Das Dokument KUMAR DHIVYA SAMPATH ET AL: "Optimal power scheduling of distributed resources in Smart Grid" (2013 IEEE INNOVATIVE SMART GRID TECHNOLOGIES-ASIA (ISGT ASIA), IEEE, 10 November 2013) betrifft eine heuristische Optimierung zur Lösung des Stromversorgungsproblems von verteilten Erzeugern in einem intelligenten Stromnetz (englisch: Smart Grid), insbesondere im Hinblick auf einen wirtschaftlichen Betrieb.

Der vorliegenden Erfindung liegt die Aufgabe zugrunde, ein verbessertes Verfahren zur Regelung eines Leistungstransfers zwischen Strombereitstellungseinheiten und einer Stromverbrauchseinheit bereitzustellen.

Die Aufgabe wird durch ein Verfahren mit den Merkmalen des unabhängigen Patentanspruches 1 sowie durch ein Stromnetz mit den Merkmalen des unabhängigen Patentanspruches 12 gelöst. In den abhängigen Patentansprüchen sind vorteilhafte Ausgestaltungen und Weiterbildungen der Erfindung angegeben.

Das erfindungsgemäße Verfahren zur Regelung eines elektrischen Leistungstransfers zwischen wenigstens zwei Strombereitstellungseinheiten und wenigstens einer Stromverbrauchseinheit umfasst wenigstens die folgenden Schritte:

- Bereitstellen eines ersten Datensatzes mit einer Information über eine bereitstellbare minimale und maximale elektrische Leistung für jede der Strombereitstellungseinheiten;
- Bereitstellen eines zweiten Datensatzes mit einer Information über einen Leistungsbedarf der Stromverbrauchseinheit und einer Gewichtung jeder der Strombereitstellungseinheiten, wobei die Gewichtung der Strombereitstellungseinheiten durch die wenigstens eine Stromverbrauchseinheit bereitgestellt wird;
- Bereitstellen einer Zielfunktion für ein numerisches Optimierungsverfahren; wobei
- die Zielfunktion die Informationen der Datensätze, und die Gewichtungen der Strombereitstellungseinheiten als Parameter umfasst, und die Gewichtung innerhalb der Zielfunktion die Leistungstransfers numerisch gewichtet; und
- Regeln des Leistungstransfers mittels eines Extremalisierens der Zielfunktion, wobei die Leistungstransfers durch das Extremalisieren ermittelt werden.

Die Regelung des Leistungstransfers kann eine Regelung der Verteilung der durch die Strombereitstellungseinheiten erzeugten oder bereitgestellten Leistungen auf die Stromverbrauchseinheit umfassen.

Jede der Strombereitstellungseinheiten ist zur Bereitstellung elektrischer Energie ausgebildet. Mit anderen Worten ist eine Strombereitstellungseinheit eine Einheit oder eine Vorrichtung, die zur Bereitstellung von Strom beziehungsweise elektrischer Energie ausgebildet ist. Insbesondere erfolgt die Bereitstellung der elektrischen Energie mittels einer Stromerzeugung und/oder mittels gespeicherter elektrischer Energie, und/oder mittels gespeicherter Energie, die in elektrische Energie gewandelt wird.

Die Stromverbrauchseinheit ist zum Verbrauch einer elektrischen Energie oder einer elektrischen Leistung ausgebildet. Gemäß der vorliegenden Erfindung wird der Leistungstransfer zwischen Strombereitstellungseinheiten und der wenigstens einen Stromverbrauchseinheit mittels des Optimierungsverfahrens in Bezug auf die Zielfunktion optimiert. Hierzu umfasst die Zielfunktion Informationen in Bezug auf die Strombereitstellungseinheiten und die Stromverbrauchseinheit, erfindungsgemäß eine Gewichtung der Strombereitstellungseinheiten, als Parameter. Die Informationen werden durch den ersten und zweiten Datensatz dargestellt, wobei die ersten Datensätze durch die Strombereitstellungseinheiten und der zweite Datensatz durch die Stromverbrauchseinheit bereitgestellt wird.

Ein Grundgedanke der Erfindung ist die Bereitstellung der Gewichtung der Strombereitstellungseinheiten. Mit anderen Worten stellt die Stromverbrauchseinheit eine Gewichtung für die Strombereitstellungseinheiten bereit, wobei diese Gewichtung direkt in die Zielfunktion des Optimierungsverfahrens eingeht. Die Gewichtung ist folglich keine Nebenbedingung des Optimierungsverfahrens, sondern parametrisiert die Zielfunktion wenigstens teilweise. Die Gewichtung bleibt typischerweise als Parameter des Optimierungsverfahrens bei der Optimierung konstant. Das Ergebnis des Optimierungsverfahrens ist ein bestmöglicher oder möglichst optimaler Leistungstransfer zwischen den Strombereitstellungseinheiten und der Stromverbrauchseinheit. Mit anderen Worten steht nach der Optimierung fest, welche Leistung die Stromverbrauchseinheit von einer der Strombereitstellungseinheiten bezieht. Die Variablen der Zielfunktion, die durch das Optimierungsverfahren bestmöglich optimiert werden, sind wenigstens die am Leistungstransfer beitragenden von den Strombereitstellungseinheiten erzeugten oder bereitgestellten Leistungen. Weiterhin kann die Zielfunktion Preise, beispielsweise einen minimalen und/oder maximalen Preis für die bereitgestellte Leistung, oder eine Kohlenstoffdioxidemission ($CO_2$-Bilanz) der Strombereitstellungseinheit, umfassen.

Die Zielfunktion wird mittels eines numerischen Optimierungsverfahrens, extremalisiert, das heißt minimiert oder maximiert. Hierbei ist es nicht erforderlich, dass die Zielfunktion ein exaktes Minimum oder Maximum aufweist, sondern ein Auffinden eines bestmöglichen Wertes, beispielsweise unterhalb eines festgelegten Schwellenwertes, ist ausreichend.

Durch die erfindungsgemäße Gewichtung der Strombereitstellungseinheiten durch die Stromverbrauchseinheit und deren Berücksichtigung beim Optimierungsverfahren ist es möglich, die Strombereitstellungseinheiten zu unterscheiden und verschieden zu gewichten. Beispielsweise erfolgt die Gewichtung durch einen Betreiber der Stromverbrauchseinheit. Wird beispielsweise eine der Strombereitstellungseinheiten stärker als die weitere gewichtet, so wird der Leistungsbedarf der Stromverbrauchseinheit bevorzugt durch die stärker gewichtete Strombereitstellungseinheiten gedeckt. Mit anderen Worten wird, soweit möglich, mehr elektrische Energie von der stärker gewichteten Strombereitstellungseinheit bezogen.

Ein wesentlicher Vorteil des erfindungsgemäßen Verfahrens ist, dass die Gewichtung in die Zielfunktion als Parameter eingeht. Dadurch wird sichergestellt, dass der Leistungsbedarf der Stromverbrauchseinheit gedeckt ist. Die Gewichtung wird somit nicht in Form einer Nebenbedingung beim Optimierungsverfahren berücksichtigt. Mit anderen Worten wird beispielsweise nicht gefordert, dass der Leistungsbedarf zu zehn Prozent von einer der Strombereitstellungseinheiten gedeckt wird. Gemäß der vorliegenden Erfindung ist mittels der Gewichtung eine der Strombereitstellungseinheiten so weit bevorzugbar, solange der Leistungsbedarf durch die Strombereitstellungseinheiten insgesamt gedeckt ist. Dadurch wird das Auffinden einer Lösung des Optimierungsverfahrens, das heißt der Leistungstransfer, sichergestellt.

Durch die vorliegende Erfindung werden die Strombereitstellungseinheiten unterscheidbar, sodass eine Kennzeichnung der bereitgestellten oder erzeugten elektrischen Energie in Bezug auf die Strombereitstellungseinheiten möglich ist. Die Gewichtung charakterisiert somit die Strombereitstellungseinheiten. Die vorliegende Erfindung kombiniert daher die Charakterisierung der Strombereitstellungseinheiten synergetisch mit der Bedingung, dass der Leistungsbedarf der Stromverbrauchseinheit gedeckt wird.

Das erfindungsgemäße Verfahren ist insbesondere für eine Regelung des elektrischen Leistungstransfers innerhalb eines Energiemarktes oder einer Strombörse, insbesondere innerhalb eines lokalen Energiemarktes oder einer lokalen Strombörse, von Vorteil. Das ist deshalb der Fall, da durch die Gewichtung die Wahrscheinlichkeit eines Leistungstransfers (oder Stromtransfers) erhöht wird. Mit anderen Worten wird die Wahrscheinlichkeit einer Transaktion erhöht.

Gemäß einer vorteilhaften Ausgestaltung der Erfindung wird die Deckung des Leistungsbedarfes durch die Strombereitstellungseinheiten als Nebenbedingung beim Extremalisieren der Zielfunktion berücksichtigt.

Dadurch wird vorteilhafterweise die Bedingungen, dass der Leistungsbedarf gedeckt wird, beim Optimierungsverfahren berücksichtigt, sodass die Deckung des Leistungsbedarfes vorteilhaftweise stets gegeben ist. Erst durch die erfindungsgemäße Berücksichtigung der Gewichtung innerhalb der Zielfunktion wird das Stellen einer derartigen Nebenbedingung physikalisch möglich. Mit anderen Worten wäre durch eine nicht erfindungsgemäße Berücksichtigung der Gewichtung als Nebenbedingung nicht immer sichergestellt, dass die Nebenbedingung der Deckung des Leistungsbedarfs erfüllbar ist.

Gemäß einer vorteilhaften Ausgestaltung der Erfindung erfolgt die Gewichtung der Strombereitstellungseinheit gemäß ihrer Stromerzeugungsart und/oder gemäß ihres Standortes.

Vorteilhafterweise kann dadurch ein Betreiber der Stromverbrauchseinheit festlegen, welche Stromerzeugungsart und/oder welchen Standort er bevorzugt. Dadurch wird vorteilhafterweise die Wahrscheinlichkeit eines Leistungstransfers weiter erhöht, da Anforderungen oder Präferenzen des Betreibers der Stromverbrauchseinheit berücksichtigt werden können. Beispielsweise wird in Bezug auf die Stromerzeugungsart zwischen erneuerbaren Stromerzeugungsarten und nicht erneuerbaren Stromerzeugungsarten unterschieden. Hierbei können Strombereitstellungseinheiten, die eine erneuerbare Stromerzeugungsart aufweisen, als erneuerbare Strombereitstellungseinheiten bezeichnet werden. Erneuerbare Strombereitstellungseinheiten sind beispielsweise Solarkraftwerke, Windkraftwerke oder Wasserkraftwerke. Nicht erneuerbare Strombereitstellungseinheiten sind beispielsweise Gaskraftwerke, Kohlekraftwerke, Nuklearkraftwerke oder Kraft-Wärme-Kopplungs-Anlagen. Mit anderen Worten wird es dem Betreiber der Stromverbrauchseinheit ermöglicht, beispielsweise Solarstrom, Windstrom, und/oder Strom aus Wasserkraftwerken bevorzugt zu beziehen. Sinnbildlich wird durch die Gewichtung der elektrischen Energie, die durch die Strombereitstellungseinheiten bereitgestellt, insbesondere erzeugt wird, eine weitere Eigenschaft, die sie kennzeichnet, der elektrischen Energie zuordenbar.

Weiterhin kann die Gewichtung bevorzugt mittels oder gemäß des Standortes der Strombereitstellungseinheit erfolgen. Hierbei kann zwischen einem räumlichen Standort der Strombereitstellungseinheiten und einem funktionalen Standort der Strombereitstellungseinheiten unterschieden werden. Unter einem funktionalen Standort der Strombereitstellungseinheiten wird beispielsweise ihre Teilnahme an einem bestimmten Energiemarkt und/oder einer bestimmten Strombörse und/oder ihre Anbindung an ein bestimmtes Stromnetz verstanden. Dadurch wird vorteilhafterweise die Wahrscheinlichkeit eines Leistungstransfers, insbesondere bei einem privaten Betreiber der Stromverbrauchseinheit, weiter erhöht.

Ein weiterer Vorteil ist, dass mittels einer Auswertung der Gewichtungen der Strombereitstellungseinheiten und/oder der Standorte bestimmte Stromerzeugungsarten beziehungsweise Standorte gefördert werden können. Werden beispielsweise erneuerbare Stromerzeugungsarten stärker gewichtet, und deckt die durch diese insgesamt erzeugte oder bereitgestellte elektrische Energie nur einen Teil des Leistungsbedarfes, so kann dies einen Ausbau von erneuerbaren Strombereitstellungseinheiten fördern. Mit anderen Worten kann die vorliegende Erfindung vorteilhafterweise zu einer Förderung erneuerbarer Energien führen.

In einer vorteilhaften Weiterbildung der Erfindung erfolgt die Gewichtung der Strombereitstellungseinheit gemäß ihres Betreibers.

Vorteilhafterweise kann dadurch der Betreiber der Stromverbrauchseinheit den Betreiber einer der Strombereitstellungseinheiten bevorzugen oder benachteiligen, das heißt stärker beziehungsweise schwächer gewichten. Mit anderen Worten bildet die Gewichtung des Betreibers der Stromverbrauchseinheit eine Positivliste (englisch: Whitelist) oder eine Negativliste (englisch: Blacklist) aus. Diese Positivliste beziehungsweise Negativliste wird mittels der Gewichtung in der Zielfunktion als Parameter berücksichtigt. Vorteilhafterweise können dadurch Präferenzen des Betreibers der Stromverbrauchseinheit in Bezug auf die Betreiber der Strombereitstellungseinheiten berücksichtigt werden. Dadurch wird wiederum die Wahrscheinlichkeit eines Leistungstransfers unter Berücksichtigung der Präferenzen erhöht. Mittels einer stärkeren Gewichtung eines Betreibers einer der Strombereitstellungseinheiten, das heißt, dass der Betreiber durch die Positivliste umfasst ist, kann der Betreiber der Stromverbrauchseinheit einen Betreiber einer der Strombereitstellungseinheit in seiner Umgebung, beispielsweise einen seiner Nachbarn, der beispielsweise eine Photovoltaikanlage als Strombereitstellungseinheit betreibt, fördern oder bevorzugen (englisch: Peer-to-Peer). Insbesondere kann die stärkere Gewichtung über den Betreiber und über den räumlichen und/oder funktionalen Standort erfolgen, sodass eine mehrfach stärkere Gewichtung und somit ein mehrfaches Bevorzugen des Betreibers einer der Strombereitstellungseinheiten möglich ist.

Die durch den Betreiber der Stromverbrauchseinheit bereitgestellte Gewichtung kann seine persönlichen Präferenzen charakterisieren. Dennoch wird die technische Aufgabe gelöst, die Wahrscheinlichkeit eines Leistungstransfers unter Berücksichtigung der Präferenzen zu erhöhen. Das ist deshalb der Fall, da der Betreiber der Stromverbrauchseinheit zwar einen Betreiber einer der Strombereitstellungseinheiten oder eine Strombereitstellungseinheit mit dem Wert Null gewichten kann, jedoch stets durch die erfindungsgemäße Berücksichtigung der Gewichtung innerhalb der Zielfunktion die Deckung des Leistungsbedarfes sichergestellt ist. Mit anderen Worten bezieht der Betreiber der Stromverbrauchseinheit, der einen Betreiber einer der Strombereitstellungseinheiten oder eine der Strombereitstellungseinheiten mit dem Wert Null bewertet hat, ebenfalls eine elektrische Leistung von diesem beziehungsweise dieser, falls der Leistungsbedarf nicht durch die weiteren Strombereitstellungseinheiten vollständig gedeckt werden kann. In einem extremen Fall wird der Leistungsbedarf sogar vollständig durch den mit dem Wert Null gewichtetem Betreiber der Strombereitstellungseinheit oder der mit dem Wert Null gewichteten Strombereitstellungseinheit gedeckt. Mit anderen Worten hat die Deckung des Leistungsbedarfes Vorrang, sodass der Leistungstransfer sichergestellt ist, und in diesem Sinne die Wahrscheinlichkeit des Leistungstransfers erhöht wird.

Ergänzend kann die Präferenz des Betreibers der Stromverbrauchseinheit, das heißt die genannte Positivliste und/oder die genannte Negativliste als Nebenbedingung beim Optimierungsverfahren berücksichtigt werden. Hierdurch stellen diese eine harte Bedingung dar, die stets erfüllt sein muss. Dadurch kann der Betreiber der Stromverbrauchseinheit einen der Betreiber der Strombereitstellungseinheiten vollständig bezüglich des Leistungstransfers ausschließen.

Gemäß einer weiteren vorteilhaften Ausgestaltung der Erfindung wird der zweite Datensatz weiterhin mit einer Information über trennbare und/oder zeitlich verschiebbare elektrische Leistungen bereitgestellt.

Dadurch wird umfasst, ob die Stromverbrauchseinheit trennbare und/oder zeitlich verschiebbare elektrische Lasten aufweist. Weiterhin kann der zweite Datensatz als Information einen maximalen Zeitraum, um den die Last zeitlich verschiebbar ist, umfassen. Dadurch wird vorteilhafterweise eine verbesserte Stabilität eines Stromnetzes ermöglicht, mit welchem die Strombereitstellungseinheiten und die Stromverbrauchseinheit verbunden sind. Weiterhin können die Betriebskosten der Stromverbrauchseinheit reduziert werden. Ein Beispiel für eine verschiebbare Last ist eine Heizlast einer Wärmepumpe. Ein Beispiel für eine trennbare Last ist eine Christbaumbeleuchtung.

In einer vorteilhaften Ausgestaltung der Erfindung werden wenigstens zwei Stromverbrauchseinheiten verwendet, wobei weiterhin jeder der ersten Datensätze mit einer Gewichtung der jeweiligen Stromverbrauchseinheit bereitgestellt wird, wobei die Zielfunktion die Gewichtung der Stromverbrauchseinheiten als Parameter umfasst.

Mit anderen Worten wird vorteilhafterweise den Betreibern der Strombereitstellungseinheiten eine Gewichtung der Stromverbrauchseinheiten ermöglicht. Dadurch können Präferenzen der Betreiber der Strombereitstellungseinheiten in Bezug auf die Stromverbrauchseinheiten berücksichtigt werden. Vorteilhafterweise wird dadurch die Wahrscheinlichkeit eines Leistungstransfers weiter erhöht.

Hierbei ist es besonders bevorzugt, wenn die Gewichtung der Stromverbrauchseinheit gemäß ihrer Stromverbrauchsart und/oder gemäß ihres Standortes erfolgt.

Es können wiederum - entsprechend der Gewichtung der Standorte der Strombereitstellungseinheiten - der räumliche und der funktionale Standort unterschieden werden. Mit anderen Worten kann der räumliche und der funktionale Standort gewichtet werden. Ein Betreiber einer Photovoltaikanlage kann dadurch eine Stromverbrauchseinheit einer seiner Nachbarn stärker gewichten und somit bevorzugen.

Besonders bevorzugt erfolgt hierbei die Gewichtung der Stromverbrauchseinheit gemäß ihres Betreibers.

Es ergeben sich zur Gewichtung der Strombereitstellungseinheiten gemäß ihres Betreibers gleichartige und gleichwertige Vorteile.

In einer besonders vorteilhaften Ausgestaltung der Erfindung erfolgt das Bereitstellen der Gewichtungen der Strombereitstellungseinheiten durch eine Benutzereingabe.

Dadurch wird vorteilhafterweise eine direkte Eingabe der Gewichtungen der Strombereitstellungseinheiten durch einen Betreiber der Stromverbrauchseinheiten ermöglicht. Hierbei kann die Benutzereingabe mittels einer Rechenvorrichtung mit einer grafischen Benutzeroberfläche (englisch: Graphical User Interface; abgekürzt GUI) erfolgen, beispielsweise über ein Netzwerk, insbesondere über das Internet. Eine Anbindung der Benutzereingabe an eine Rechnerwolke oder Datenwolke (englisch: Cloud), insbesondere an MindSphere, ist ebenfalls vorteilhaft. Die Informationen des zweiten Datensatz können ein Profil der Stromverbrauchseinheit ausbilden. Weiterhin können die Informationen der ersten Datensätze jeweils ein Profil einer der Strombereitstellungseinheiten ausbilden.

Weiterhin kann die Benutzereingabe mittels einer Regeleinheit oder Steuereinheit der Strombereitstellungseinheit, und/oder mittels einer Regeleinheit und/oder Steuereinheit der Stromverbrauchseinheit erfolgen. Hierzu kann die Regeleinheit oder Steuereinheit der Strombereitstellungseinheit, und/oder die Regeleinheit oder Steuereinheit der Stromverbrauchseinheit eine Benutzerschnittstelle aufweisen.

Gemäß einer vorteilhaften Ausgestaltung der Erfindung wird als eine der Strombereitstellungseinheiten ein Energiespeicher verwendet, insbesondere ein elektrochemischer Energiespeicher, beispielsweise eine Batterie, wobei der erste Datensatz des Energiespeichers weiterhin eine Verfügbarkeit einer mittels des Energiespeichers gespeicherten elektrischen Energie und/oder eine minimale Kapazität des Energiespeichers und/oder eine maximale Kapazität des Energiespeichers und/oder einen Ladewirkungsgrad des Energiespeichers und/oder eine Verlustrate des Energiespeichers als Information umfasst.

Mit anderen Worten werden weiterhin die Verfügbarkeit einer mittels des Energiespeichers gespeicherten Energiemenge und/oder die minimale und/oder maximale Kapazität des Energiespeichers und/oder der Ladewirkungsgrad des Energiespeichers und/oder die Verlustrate des Energiespeichers als Parameter in der Zielfunktion berücksichtigt.

Durch die Verwendung des Energiespeichers wird vorteilhafterweise die Erzeugung der elektrischen Energie durch eine der Strombereitstellungseinheiten von ihrer Bereitstellung und ihrem Verbrauch durch die Stromverbrauchseinheit zeitlich entkoppelt. Dadurch wird vorteilhaftweise die Flexibilität der Regelung des Leistungstransfers zwischen den Strombereitstellungseinheiten und der Stromverbrauchseinheit oder den Stromverbrauchseinheiten verbessert. Dies ist besonders für erneuerbare Stromerzeugungsarten der Strombereitstellungseinheiten von Vorteil. Beispielsweise wird die elektrische Energie einer Photovoltaikanlage am Tag erzeugt. Mittels des Energiespeichers ist es vorteilhafterweise möglich, dass ebenfalls in der Nacht ein Leistungstransfer von der Photovoltaikanlage zur Stromverbrauchseinheit (über den Energiespeicher) erfolgt. Der Leistungstransfer kann somit indirekt erfolgen.

Die durch die Datensätze umfassten Informationen, die den Energiespeicher kennzeichnen, das heißt die minimale und/oder maximale Kapazität des Energiespeichers und/oder der Ladewirkungsgrad des Energiespeichers und/oder die Verlustrate des Energiespeichers können hierbei mittels Messungen erfasst oder mittels eines mathematischen Modells des Energiespeichers berechnet werden. Durch die Bereitstellung einer minimalen Kapazität ist sichergestellt, dass der Energiespeicher nicht vollständig entladen wird. Dadurch wird eine Alterung des Energiespeichers vorteilhafterweise reduziert. Weiterhin könnte die zurückbehaltene Energiemenge, die zur minimalen Kapazität korrespondiert, durch einen Betreiber des Energiespeichers selbst verwendet werden.

Weiterhin bleibt bei einer Speicherung einer elektrischen Energie mittels des Energiespeichers ihre Kennzeichnung, das heißt ihre Gewichtung oder ihre Gewichtungen, beispielsweise gemäß ihrer Strombereitstellungseinheit, ihrer Stromerzeugungsart und/oder gemäß dem Standort ihrer Strombereitstellungseinheit erhalten.

Ein Betreiber eines Energiespeichers kann einen Preis für die Speicherung vorsehen. Hierbei kann angenommen werden, dass der Betreiber der Stromverbrauchseinheit, der beispielsweise Solarstrom stärker gewichtet hat, die mit der Speicherung verbundenen Mehrkosten trägt.

In einer vorteilhaften Ausgestaltung der Erfindung wird der Energiespeicher eines elektrischen Fahrzeuges, insbesondere eines elektrischen Landfahrzeuges (elektrisches Auto), eines elektrischen Wasserfahrzeuges oder eines elektrischen Luftfahrzeuges (elektrisches Flugzeug) verwendet, wobei der erste Datensatz weiterhin eine Verfügbarkeit des elektrischen Fahrzeuges und/oder einen minimalen Energiebedarf zum Betreiben des elektrischen Fahrzeuges als Information umfasst.

Mit anderen Worten werden weiterhin die Verfügbarkeit des elektrischen Fahrzeuges und/oder sein minimaler Energiebedarf zum Betreiben als Parameter für die Zielfunktion verwendet und in diesem Sinne berücksichtigt. Hierbei können die genannten Informationen mittels eines Modells des elektrischen Fahrzeuges bereitgestellt werden. Beispielsweise ist der minimale Energiebedarf durch eine Reisestrecke bestimmt. Die Strecke oder Reisestrecke kann hierbei mittels einer Verbindung des Fahrzeuges mit einem Kalender des Betreibers, beispielsweise Outlook, Apple Kalender und/oder Google, ermittelt werden. Aus den Daten des Kalenders kann die für die Strecke erforderliche Energie über eine Festlegung der minimalen Kapazität im Energiespeicher zurückbehalten werden.

Eine nicht beanspruchte Regelvorrichtung zur Regelung eines elektrischen Leistungstransfers zwischen wenigstens zwei Strombereitstellungseinheiten und wenigstens einer Stromverbrauchseinheit ist zur Durchführung eines Verfahrens gemäß der vorliegenden Erfindung und/oder einer ihrer Ausgestaltungen ausgebildet.

Ein nicht beanspruchter Energiemarkt oder eine nicht beanspruchte Energiebörse umfasst wenigstens eine Regelvorrichtung. Dadurch ist der Energiemarkt oder die Energiebörse ebenfalls zur Durchführung eines Verfahrens gemäß der vorliegenden Erfindung und/oder einer ihrer Ausgestaltungen ausgebildet.

Es ergeben sich zum erfindungsgemäßen Verfahren gleichartige und gleichwertige Vorteile der Regelvorrichtung.

Das erfindungsgemäße Stromnetz umfasst:

- wenigstens zwei Strombereitstellungseinheiten;
- wenigstens eine Stromverbrauchseinheit; und
- eine Regelvorrichtung zur Regelung eines elektrischen Leistungstransfers zwischen den Strombereitstellungseinheiten und der wenigstens einen Stromverbrauchseinheit; sowie
- zwei erste Datenverbindungen zum Austausch von ersten Datensätzen zwischen den Strombereitstellungseinheiten und der Regelvorrichtung;
- eine zweite Datenverbindung zum Austausch eines zweiten Datensatzes zwischen der wenigstens einen Stromverbrauchseinheit und der Regelvorrichtung; und
- eine Stromtransferleitung zwischen den Strombereitstellungseinheiten und der wenigstens einen Stromverbrauchseinheit zum elektrischen Leistungstransfer; wobei
- die Regelvorrichtung dazu eingerichtet ist, den Leistungstransfer durch das erfindungsgemäße zu regeln.

Durch das erfindungsgemäße Stromnetz kann vorteilhafterweise ein Energiemarkt bereitgestellt werden, der die Leistungstransfers zwischen den Strombereitstellungseinheiten und den Stromverbrauchseinheiten erfindungsgemäß regelt, insbesondere verteilt. Dadurch kann das Stromnetz Präferenzen der Strombereitstellungseinheiten und der Stromverbrauchseinheiten beziehungsweise ihrer Betreiber berücksichtigen, ohne die Wahrscheinlichkeit eines Leistungstransfers zur verringern. Die genannten Präferenzen werden durch die Gewichtungen berücksichtigt, wobei die Gewichtungen als Parameter der Zielfunktion in das Optimierungsverfahren einfließen. Dadurch werden die Präferenzen möglichst optimal berücksichtigt. Typischerweise werden ebenfalls Preise oder Preisvorstellungen als Parameter bei der Zielfunktion berücksichtigt. Der tatsächliche Preis für eine bereitgestellte Energie kann mittels des Optimierungsverfahrens bestimmt werden, das heißt dieser ist eine weitere Variable der Zielfunktion. Die Variablen der Zielfunktion können von Zeitpunkt zu Zeitpunkt, das heißt gemäß Zeitschritten, erneut bestimmt werden. Dadurch kann der tatsächliche Preis (Transaktionspreis) - vergleichbar zu einer Wertpapierbörse - dynamisch bestimmt werden. Der zweite Datensatz kann als Information einen maximalen Preis, den der Betreiber der Stromverbrauchseinheit maximal erwartet, umfassen. Weiterhin kann der erste Datensatz als Information einen minimalen Preis umfassen, den der Betreiber einer der Strombereitstellungseinheit minimal erwartet. Ferner kann der erste Datensatz für einen Energiespeicher ebenfalls Preise oder Preisvorstellungen in Bezug auf eine Speicherung der elektrischen Energie als Information umfassen. Wird das Verfahren regelmäßig zu verschiedenen Zeitpunkten durchgeführt, so koppelt der Energiespeicher zwei aufeinanderfolgende Zeitpunkte oder Zeitschritte. Dadurch sind beispielsweise die Verluste des Energiespeichers bei den Preisvorstellungen zu berücksichtigen. Diese können ebenfalls als Parameter in die Zielfunktion eingehen. Beispielsweise stellt der Betreiber des Energiespeichers einen Minimalpreis (Euro pro Kilowattstunde oder Euro pro Kilowattstunde pro Speicherzeit) bereit. An dem Zeitpunkt, an dem die elektrische Energie an die Stromverbrauchseinheit transferiert wird (Leistungstransfer), wird der mittels des Optimierungsverfahrens ermittelte Transaktionspreis für die Speicherung festgelegt.

Gemäß einer vorteilhaften Weiterbildung der Erfindung umfasst jede der Strombereitstellungseinheiten eine Messvorrichtung zum Erfassen wenigstens einer der Informationen des ersten Datensatzes der jeweiligen Strombereitstellungseinheiten und/oder die Stromverbrauchseinheit wenigstens eine Messvorrichtung zum Erfassen einer der Informationen des zweiten Datensatzes.

Mit anderen Worten weisen die Strombereitstellungseinheiten und/oder die Stromverbrauchseinheiten Messgeräte oder Sensoren auf, die zum Erfassen der jeweiligen Informationen ausgebildet sind. Dadurch kann vorteilhafterweise ein Ist-Zustand aller Strombereitstellungseinheiten und Stromverbrauchseinheiten ermittelt werden. Insbesondere ist es von Vorteil, wenn möglichst viele Informationen für die Strombereitstellungseinheiten und/oder die Stromverbrauchseinheiten bereitgestellt werden. Beispielsweise können für eine Photovoltaikanlage ihre voraussichtliche Lebensdauer, ihre Effizienz und/oder ihre Wartungsintervalle als Information bereitgestellt und ebenfalls als Parameter der Zielfunktion beim Optimierungsverfahren berücksichtigt werden.

Weiterhin kann das Messgerät als intelligenter Zähler (englisch: Smart Meter) ausgebildet sein. Weist eine Stromverbrauchseinheit kein Messgerät auf, so kann zwischen industriellen und privaten Stromverbrauchseinheiten unterschieden werden. Für eine industrielle Stromverbrauchseinheit kann der Leistungsbedarf typischerweise bereitgestellt werden. Für ein Gebäude, das die private Stromverbrauchseinheit umfasst, kann der Leistungsbedarf gemäß der Größe des Gebäudes, der Anzahl der Bewohner des Gebäudes und/oder über den Status der Bewohner, das heißt Arbeitnehmer, Kind oder Pensionär, mittels der Rechenvorrichtung ermittelt, insbesondere vorhergesagt, werden.

Durch die Messgeräte wird der Betrieb des Stromnetzes vorteilhafterweise nahezu vollständig automatisiert, sodass ein Eingreifen der jeweiligen Betreiber typischerweise nicht erforderlich ist. Die erforderlichen technischen Parameter, die in die Zielfunktion eingehen, werden automatisiert durch die Messgeräte erfasst und als Information über die Datensätze bereitgestellt. Eine Anpassung oder Änderung der Gewichtung ist jedoch möglich und vorgesehen.

Besonders bevorzugt umfasst die Stromverbrauchseinheit eine Benutzerschnittstelle zur Eingabe der Gewichtung der Strombereitstellungseinheiten.

Dadurch kann vorteilhafterweise die Gewichtung der Strombereitstellungseinheiten durch einen Betreiber der Stromverbrauchseinheit eingegeben und somit bereitgestellt werden. Die Gewichtung ist ebenfalls über die Benutzerschnittstelle anpassbar oder änderbar.

Weitere Vorteile, Merkmale und Einzelheiten der Erfindung ergeben sich aus den im Folgenden beschriebenen Ausführungsbeispielen sowie anhand der Zeichnungen. Dabei zeigen schematisiert:

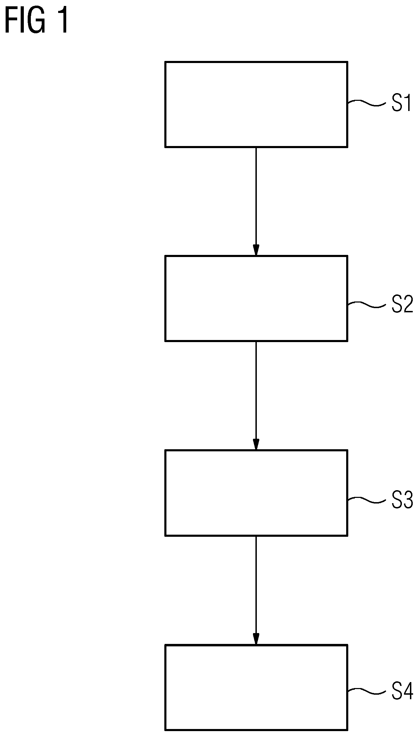

Figur 1    ein Flussdiagramm des erfindungsgemäßen Verfahrens; und

Figur 2    eine Benutzerschnittstelle für eine Eingabe einer Gewichtung von Strombereitstellungseinheiten.

Gleichartige, gleichwertige oder gleichwirkende Elemente können in einer der Figuren oder in den Figuren mit demselben Bezugszeichen versehen sein.

In einem ersten Schritt S1 des erfindungsgemäßen Verfahrens wird ein erster Datensatz mit einer Information über eine bereitstellbare minimale und maximale elektrische Leistung für jede der Strombereitstellungseinheiten bereitgestellt. Mit anderen Worten ist dadurch der Regelung bekannt, welche minimale und maximale elektrische Leistung jede der Strombereitstellungseinheiten bereitstellt, sodass dies durch die Regelung berücksichtigt werden kann.

In einem zweiten Schritt S2 des erfindungsgemäßen Verfahrens wird ein zweiter Datensatz mit einer Information über einen Leistungsbedarf der Stromverbrauchseinheit und einer Gewichtung jeder der Strombereitstellungseinheiten durch die Stromverbrauchseinheit bereitgestellt. Mit anderen Worten ist dadurch der Regelung bekannt, welchen Leistungsbedarf die Stromverbrauchseinheit aufweist und wie die Strombereitstellungseinheiten gewichtet sind. Insbesondere ist durch die bereitgestellten Information beziehungsweise Datensätze festgelegt, welches Angebot an elektrischer Energie und welche Nachfrage an elektrischer Energie bestehen.

Weiterhin wird erfindungsgemäß die Gewichtung der Strombereitstellungseinheiten durch die Stromverbrauchseinheit bereitgestellt. Dadurch kann ein Betreiber der Stromverbrauchseinheit die Strombereitstellungseinheiten verschieden gewichten. Mit anderen Worten kann eine Präferenz des Betreibers in Bezug auf die Stromverbrauchseinheit berücksichtigt werden, beispielsweise seine Präferenz in Bezug auf eine Stromerzeugungsart der Strombereitstellungseinheit und/oder in Bezug auf ihren Standort (räumlich oder funktional) und/oder in Bezug auf einen Betreiber der Strombereitstellungseinheit. Die erfindungsgemäße Gewichtung hat somit insbesondere die technische Wirkung, die Präferenzen zu berücksichtigen, ohne dass es zu einer verringerten Wahrscheinlichkeit des Leistungstransfers kommt. Weiterhin wird durch die vorliegende Erfindung die Wahrscheinlichkeit des Leistungstransfers bei einer Berücksichtigung der Präferenzen (als Gewichtung) erhöht.

In einem dritten Schritt S3 des erfindungsgemäßen Verfahrens wird eine Zielfunktion für ein numerisches Optimierungsverfahren bereitgestellt. Hierbei ist es erfindungsgemäß vorgesehen, die Informationen der Datensätze und besonders die Gewichtung der Strombereitstellungseinheiten als Parameter in der Zielfunktion zu berücksichtigen. Mit anderen Worten wird die Zielfunktion in Abhängigkeit der Gewichtungen und der Informationen der Datensätze bereitgestellt oder gebildet. Die Informationen der Datensätze sowie die Gewichtung beziehungsweise Gewichtungen stellen hierbei Parameter der Zielfunktion dar, das heißt diese werden beim Minimieren der Zielfunktion mittels des Optimierungsverfahrens als konstant angesehen. Die Variablen der Zielfunktion sind beispielsweise die durch die Strombereitstellungseinheiten bereitgestellten elektrischen Leistungen. Sind die Strombereitstellungseinheiten oder das erfindungsgemäße Stromnetz an ein weiteres externes Stromnetz angebunden, kann die durch diese Stromnetze zugeführte und abgeführte elektrische Leistung ebenfalls eine Variable der Zielfunktion sein. Mit anderen Worten kann das erfindungsgemäße Stromnetz mit weiteren Stromnetzen, insbesondere mit übergeordneten Stromnetzen, zu einem Leistungsaustausch (Leistungstransfer) gekoppelt sein.

In einem vierten Schritt S4 des erfindungsgemäßen Verfahrens erfolgt das Regeln des Leistungstransfers mittels einer Extremalisierung der Zielfunktion. Hierbei werden beispielsweise die bestmöglichen Werte der Leistungen der Strombereitstellungseinheiten ermittelt. Dadurch ergibt sich vorteilhafterweise ein möglichst optimaler Leistungstransfer von den Strombereitstellungseinheiten zur Stromverbrauchseinheit unter der Berücksichtigung der Präferenzen, das heißt der Gewichtung der Strombereitstellungseinheiten. Hierbei umfasst die Bedeutung des Regelns des Leistungstransfers eine Regelung der Verteilung der erzeugten oder bereitgestellten Leistungen. Insbesondere ist ein direkter Leistungstransfer von den Strombereitstellungseinheiten zu den Stromverbrauchseinheiten nicht erforderlich. Ein indirekter Leistungstransfer über einen Energiespeicher und/oder über ein externes Stromnetz und/oder weitere Elemente kann vorgesehen sein.

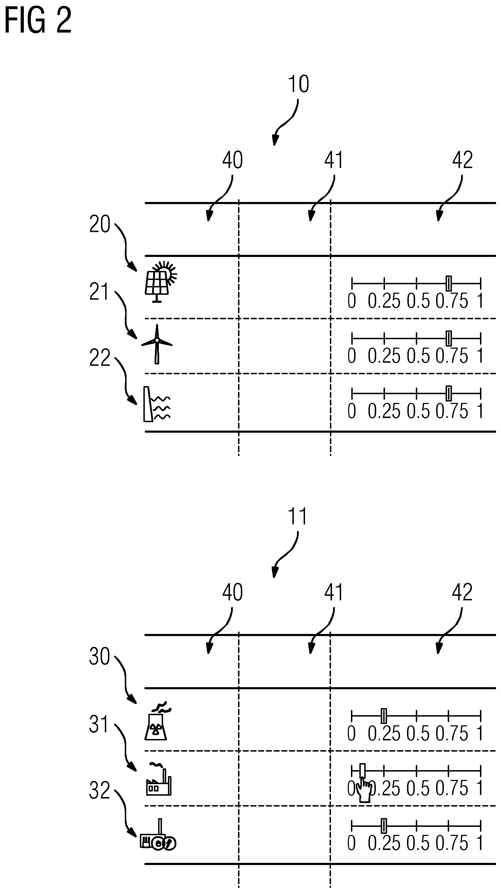

Das Bereitstellen der Gewichtung kann bevorzugt mittels einer Benutzerschnittstelle, das heißt über eine Benutzereingabe erfolgen. Eine beispielhafte Benutzerschnittstelle ist in Figur 2 dargestellt.

Exemplarisch wird im Folgenden eine Zielfunktion Z mit einer Mehrzahl von Gewichtungen mathematisch dargestellt.

Im Weiteren wird der Betreiber einer Strombereitstellungseinheit als Erzeuger und der Betreiber einer Stromverbrauchseinheit als Verbraucher bezeichnet.

Die Zielfunktion Z kann mehrere Teilzielfunktion $Z_n$ umfassen.

Eine erste Teilzielfunktion $Z_1$ für die Verbraucher ist beispielsweise mittels

$$Z_1 = \sum_t \sum_{i,j,k} w_{ij}^{\mathrm{E}} \cdot w_{jk}^{A} \cdot P_{ijk;t} \cdot \left( x_j^{\mathrm{MAX}} - x_{k;t} \right)$$

bereitgestellt oder festgelegt, wobei $w_{ij}^{\mathrm{E}}$ die Gewichtung des Erzeugers *i* durch den Verbraucher *j,* $w_{jk}^{A}$ die Gewichtung der Stromerzeugungsart *k* durch den Verbraucher *j,* $P_{ijk;t}$ den Leistungstransfer vom Erzeuger *i* zum Verbraucher *j* mittels der Stromerzeugungsart *k* zum Zeitpunkt *t,* $x_j^{\mathrm{MAX}}$ einen maximalen Preis, den der Verbraucher *j* erwartet, und $x_{k;t}$ den Transaktionspreis (tatsächlicher oder ausgehandelter Preis) der Stromerzeugungsart *k* zum Zeitpunkt *t* bezeichnet. Hierbei ist die Zielfunktion eine Linearkombination der einzelnen Leistungen $P_{ijk;t}$ beziehungsweise Leistungstransfers. Mit anderen Worten kennzeichnet $P_{ijk;t}$ den Leistungstransfer von der Strombereitstellungseinheit *i* mit der Stromerzeugungsart *k* zur Stromverbrauchseinheit *j* zum Zeitpunkt *t* beziehungsweise zum Zeitschritt *t*.

Eine zweite Teilzielfunktion $Z_2$ für die Erzeuger ist beispielsweise mittels

$$Z_2 = \sum_t \sum_{i,j,k} w_{ij}^{\mathrm{V}} \cdot P_{ijk;t} \cdot \left( x_{k;t} - x_{i,k}^{\mathrm{MIN}} \right)$$

bereitgestellt oder festgelegt, wobei $w_{ij}^{\mathrm{V}}$ die Gewichtung des Verbrauchers *j* durch den Erzeuger *i*, und $x_{i;k}^{\mathrm{MIN}}$ einen minimalen Preis, den der Erzeuger *i* für seine Stromerzeugungsart *k* erwartet, bezeichnet.

Eine dritte Teilzielfunktion $Z_3$ für die Verbraucher unter einer Berücksichtigung von Energiespeichern ist beispielsweise mittels

$$Z_3 = \sum_t \sum_{i,j,k,l} w_{ij}^{\mathrm{E}} \cdot w_{jk}^{A} \cdot P_{ijkl;t}^{\mathrm{ESOUT}} \cdot \left( x_j^{\mathrm{max}} - x_{k;t} - x_{i,j,k,l;t}^{\mathrm{ES}} \cdot \Delta t \right)$$

bereitgestellt oder festgelegt, wobei $x_{i,j,k,l;t}^{\mathrm{ES}}$ den aufgrund der Speicherung im Energiespeicher *l* zum Zeitpunkt *t + 1* zusätzlich durch den Verbraucher *j* zu begleichenden Preis, $\Delta t$ den Zeitschritt, und $P_{ijkl;t}^{\mathrm{ESOUT}}$ die vom Verbraucher *j* aus dem Energiespeicher *l* des Erzeugers *i* und gemäß der Erzeugungsart *k* bezogene elektrische Leistung (Leistungstransfer) bezeichnet.

Eine vierte Teilzielfunktion $Z_4$ für die Erzeuger unter einer Berücksichtigung von Energiespeichern ist beispielsweise mittels

$$Z_4 = \sum_t \sum_{i,j,k,l} w_{ij}^{\mathrm{V}} \cdot P_{ijkl;t}^{\mathrm{ESIN}} \cdot \left( x_{k;t} - x_{i,k}^{\mathrm{MIN}} \right)$$

bereitgestellt oder festgelegt, wobei $P_{ijkl;t}^{\mathrm{ESIN}}$ die vom Erzeuger *i* mit der Stromerzeugungsart *k* in den Energiespeicher *l* geladene und für den Verbraucher *j* vorgesehene elektrische Leistung bezeichnet.

Eine fünfte Teilzielfunktion $Z_5$ für die Betreiber des Energiespeichers ist mittels

$$Z_5 = \sum_t \sum_{i,j,k,l} \left( P_{ijkl;t}^{\mathrm{EOUT}} - P_{ijkl;t}^{\mathrm{ESIN}} \right) \cdot x_{k;t}$$

bereitgestellt oder festgelegt.

Eine sechste Teilzielfunktion $Z_6$ des Verbrauchers für trennbare Leistungen ist beispielsweise mittels

$$Z_6 = \sum_t \sum_{j,d} (1 - p_{j,d}) \cdot x_{j,d}^{\mathrm{D}} \cdot P_{j,d,t}^{\mathrm{D}}$$

bereitgestellt oder festgelegt, wobei $p_{j,d}$ ein binärwertiger Parameter ist, der den Wert Null aufweist, wenn ein trennbarer Leistungsbedarf (oder ein trennbares Leistungsprofil) d des Verbrauchers *j* getrennt wird, $x_{j,d}^{\mathrm{D}}$ einen Kostenvorteil für den Verbraucher *j* bei der Trennung des Leistungsbedarfes d, und $P_{j,d,t}^{\mathrm{D}}$ die trennbare Leistung **d** des Verbrauchers *j* bezeichnet.

Eine siebte Teilzielfunktion $Z_7$ für ein elektrisches Fahrzeug *l* ist beispielsweise mittels

$$Z_7 = \sum_l \sum_t \sum_{i,k} w_{ij_l}^{\mathrm{E}} \cdot w_{j_l k}^{A} \cdot P_{ikl;t}^{\mathrm{EV}} \cdot \left( x_{j_l}^{\mathrm{MAX}} - x_{k;t} \right)$$

bereitgestellt oder festgelegt, wobei $P_{ikl;t}^{\mathrm{EV}}$ die durch den Betreiber *i* (hier Erzeuger) für das elektrische Fahrzeug *l* mit der Stromerzeugungsart *k* bereitgestellte Leistung bezeichnet. Weiterhin ist hierbei über alle elektrischen Fahrzeuge *l* zu summieren, wobei der den Betreiber zugehörige Index *j* von *l* abhängig ist, beziehungsweise durch *l* festgelegt ist.

Die Zielfunktion Z wird mittels der Summe $Z = \sum_{n=1}^{7} Z_n$ bereitgestellt oder festgelegt. Weiterhin können eine Mehrzahl von Nebenbedingungen für das Optimierungsverfahren bereitgestellt werden. Beispielsweise ist

$$\sum_t \sum_{i,k} \left( P_{ijk;t} + \sum_l P_{ijkl;t}^{\mathrm{EOUT}} \right) = P_{j,t}^{\mathrm{D}}$$

eine Nebenbedingung, die sicherstellt, dass der Leistungsbedarf $P_{j,t}^{\mathrm{D}}$ des Verbrauchers *j* zum Zeitpunkt *t* durch alle Leistungstransfers gedeckt wird. Diese wird bei einem Vorhandensein von trennbaren und/oder zeitlich verschiebbaren Leistungen und/oder externen Leistungen angepasst. Weitere Nebenbedingungen, insbesondere Positivlisten und/oder Negativlisten von Erzeuger und/oder Verbraucher, sind vorgesehen.

Ferner kann das Stromnetz mit einem weiteren übergeordneten externen Stromnetz (Großmarkt oder Großhandel) verbunden sein, wobei dann in der Zielfunktion die dadurch eingespeisten und ausgespeisten Leistungstransfers (externe Leistungen oder externe Leistungstransfers) zu berücksichtigen sind. Dies kann ebenfalls mittels einer Linearkombination und/oder Nebenbedingungen erfolgen.

Die Figur 2 zeigt exemplarisch eine Benutzerschnittstelle, die als graphische Benutzerschnittstelle oder graphische Benutzeroberfläche ausgebildet ist. Hierbei wird zwischen Strombereitstellungseinheiten, die eine erneuerbare Stromerzeugungsart aufweisen und Strombereitstellungseinheiten, die eine nicht erneuerbare Stromerzeugungsart aufweisen unterschieden. Hierzu wird eine erste Tabelle 10 dargestellt, die zu den Strombereitstellungseinheiten korrespondiert, die eine erneuerbare Stromerzeugungsart aufweisen, und eine zweite Tabelle 11 dargestellt, die zu den Strombereitstellungseinheiten korrespondiert, die eine nicht erneuerbare Stromerzeugungsart aufweisen.

Die erste Tabelle 10 weist exemplarisch drei Zeilen 20, 21, 22 und drei Spalten 40, 41, 42 auf. Die erste Zeile 20 ist einer als Photovoltaikanlage ausgebildeten Strombereitstellungseinheit zugeordnet. Die zweite Zeile 21 ist einer als Windkraftwerk ausgebildeten Strombereitstellungseinheit zugeordnet. Die dritte Zeile 22 ist einer als Wasserkraftwerk ausgebildeten Strombereitstellungseinheit zugeordnet.

Die erste Spalte 40 der ersten Tabelle 10 kennzeichnet die Stromerzeugungsart der jeweiligen Strombereitstellungseinheit. Die zweite Spalte 41 der ersten Tabelle 10 kennzeichnet einen jeweiligen Preis, beispielsweise Euro pro Kilowattstunde. Die dritte Spalte 42 der ersten Tabelle 10 korrespondiert zur Gewichtung der Strombereitstellungseinheiten und hier ebenfalls zu Gewichtung der Stromerzeugungsarten. Im vorliegenden Ausführungsbeispiel ist die Gewichtung der Strombereitstellungseinheiten äquivalent zur Gewichtung der Stromerzeugungsarten.

Für eine Eingabe der Gewichtungen der Strombereitstellungseinheiten beziehungsweise der Stromerzeugungsarten weist die Benutzerschnittstelle für jede der Strombereitstellungseinheiten beziehungsweise Stromerzeugungsarten einen Schieberegler auf, dessen Wert zwischen Null und Eins in Schritten von einem Viertel variiert werden kann. Die Gewichtung wird daher als Wert zwischen Null und Eins bereitgestellt, wobei es nicht erforderlich ist, dass die Summe der Werte der Gewichtungen den Wert Eins ergibt. Ein vergleichsweiser hoher Wert der Gewichtung entspricht einer Bevorzugung der zugehörigen Strombereitstellungseinheit. Ein vergleichsweise kleiner Wert der Gewichtung entspricht einer Benachteiligung der zugehörigen Strombereitstellungseinheit in Bezug auf den Leistungstransfer. Die Schieberegler können durch einen Benutzer, beispielsweise mittels einer Computermaus oder mittels eines berührungsempfindlichen Bildschirm (englisch: Touchscreen) oder mittels einer Gestensteuerung erfolgen, im Bereich zwischen Null und Eins in Schritten von einem Viertel verschoben und festgesetzt werden. Eine Benutzereingabe mittels eines Mobiltelefons (englisch: Smartphone) oder mittels eines Tabletcomputers ist ebenfalls vorgesehen.

Entsprechend der ersten Tabelle 10 weist die zweite Tabelle 11 der nicht erneuerbaren Strombereitstellungseinheiten beziehungsweise Stromerzeugungsarten ebenfalls drei Zeilen 30, 31, 32 auf, wobei die erste Zeile 30 einem Nuklearkraftwerk, die zweite Zeile 31 einem Gaskraftwerk und die dritte Zeile 32 einer Kraftwärmekopplungsanlage zugeordnet ist. Die zweite Tabelle 11 weist ebenfalls drei Spalten 40, 41, 42 auf, wobei die erste Spalte 40 zur Stromerzeugungsart, die zweite Spalte 41 einem Preis, beispielsweise Euro pro Kilowattstunde, und die dritte Spalte 42 zur Gewichtung der Strombereitstellungseinheiten korrespondiert.

Das dargestellte Beispiel verdeutlicht, dass erneuerbare Stromerzeugungsarten im Vergleich zu nicht erneuerbaren Stromerzeugungsarten stärker gewichtet werden (mit 0.75), sodass der Betreiber der Stromverbrauchseinheit erneuerbare Stromerzeugungsarten gegenüber nicht erneuerbare Stromerzeugungsarten bevorzugt. Die Gewichtung wird als Parameter der Zielfunktion beim Minimieren der Zielfunktion berücksichtigt. Mit anderen Worten fließt die Gewichtung in die Zielfunktion ein. Dadurch sucht das Optimierungsverfahren sinnbildlich automatisch nach einem bestmöglichen Leistungstransfer, der einen möglichst hohen Anteil an erneuerbaren Stromerzeugungsarten aufweist. Hierbei bedeutet ein möglichst hoher Anteil, dass stets sichergestellt sein muss, dass der Leistungsbedarf insgesamt durch alle Strombereitstellungseinheiten gedeckt wird. Beispielsweise bedeutet dies nicht zwingend, dass die Stromverbrauchseinheit 75 Prozent ihrer elektrischen Energie von den erneuerbaren Strombereitstellungseinheiten bezieht. Die Gewichtung stellt lediglich sicher, dass ein möglichst hoher Anteil des gesamten Leistungsbedarfes der Stromverbrauchseinheit durch erneuerbare Stromerzeugungsarten und ihre zugehörigen Strombereitstellungseinheiten gedeckt wird. Dies ist ein Grundgedanke der vorliegenden Erfindung, der dazu führt, dass Präferenzen berücksichtigt werden können, ohne dass es zu einem Leistungsausfall kommt.

Ein Leistungstransfer kann zu einer geschäftlichen Transaktion korrespondieren, sodass die vorliegende Erfindung insbesondere für Energiemärkte oder Strombörsen von Vorteil ist. Hierbei wird durch die vorliegende Erfindung die Wahrscheinlichkeit einer Transaktion deutlich erhöht, sodass eine verbesserte Regelung der Leistungstransfers erfolgt. Mit anderen Worten kann ein Verfahren gemäß der vorliegenden Erfindung oder eine ihrer Ausgestaltungen zum Betrieb eines Energiemarktes oder zum Betrieb einer Strombörse herangezogen werden. Dadurch ergibt sich ein bestmöglicher Betrieb unter Berücksichtigung von Gewichtungen, die beispielsweise persönliche Präferenzen der Betreiber der Stromverbrauchseinheiten und/oder der Strombereitstellungseinheiten charakterisieren.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

**Patentansprüche**

1. Verfahren zur Regelung eines elektrischen Leistungstransfers zwischen wenigstens zwei Strombereitstellungseinheiten und wenigstens einer Stromverbrauchseinheit, umfassend die Schritte:

   - Bereitstellen eines ersten Datensatzes mit einer Information über eine bereitstellbare minimale und maximale elektrische Leistung für jede der Strombereitstellungseinheiten (S1);
   - Bereitstellen eines zweiten Datensatzes mit einer Information über einen Leistungsbedarf der wenigstens einen Stromverbrauchseinheit und einer Gewichtung (42) jeder der Strombereitstellungseinheiten (S2);
   - Bereitstellen einer Zielfunktion für ein numerisches Optimierungsverfahren (S3); wobei
   - die Zielfunktion die Informationen der Datensätze, und die Gewichtungen (42) der Strombereitstellungseinheiten als Parameter umfasst, und die Gewichtung (42) innerhalb der Zielfunktion die Leistungstransfers numerisch gewichtet; und
   - Regeln des Leistungstransfers mittels eines Extremalisierens der Zielfunktion (S4), wobei die Leistungstransfers durch das Extremalisieren ermittelt werden; **dadurch gekennzeichnet, dass** die Gewichtung (42) der Strombereitstellungseinheiten durch die wenigstens eine Stromverbrauchseinheit bereitgestellt wird.

2. Verfahren gemäß Anspruch 1, bei dem eine Deckung des Leistungsbedarfes durch die Strombereitstellungseinheiten als Nebenbedingung beim Extremalisieren der Zielfunktion berücksichtigt wird.

3. Verfahren gemäß Anspruch 1 oder 2, bei dem die Gewichtung (42) der Strombereitstellungseinheiten gemäß ihrer Stromerzeugungsart und/oder gemäß ihres Standortes erfolgt.

4. Verfahren gemäß einem der vorhergehenden Ansprüche, bei dem die Gewichtung (42) der Strombereitstellungseinheiten gemäß ihres Betreibers erfolgt.

5. Verfahren gemäß einem der vorhergehenden Ansprüche, bei dem der zweite Datensatz weiterhin mit einer Information über trennbare und/oder zeitlich verschiebbare elektrische Leistungen bereitgestellt wird.

6. Verfahren gemäß einem der vorhergehenden Ansprüche, mit wenigstens zwei Stromverbrauchseinheiten, bei dem weiterhin jeder der ersten Datensätze mit einer Gewichtung jeder der Stromverbrauchseinheiten bereitgestellt wird, wobei die Zielfunktion die Gewichtung der Stromverbrauchseinheiten als Parameter umfasst.

**7.** Verfahren gemäß Anspruch 6, bei dem die Gewichtung der Stromverbrauchseinheiten gemäß ihrer Stromverbrauchsart und/oder gemäß ihres Standortes erfolgt.

**8.** Verfahren gemäß Anspruch 6 oder 7, bei dem die Gewichtung der Stromverbrauchseinheiten gemäß ihres Betreibers erfolgt.

**9.** Verfahren gemäß einem der vorhergehenden Ansprüche, bei dem das Bereitstellen der Gewichtungen (42) der Strombereitstellungseinheiten durch eine Benutzereingabe erfolgt.

**10.** Verfahren gemäß einem der vorhergehenden Ansprüche, bei dem als eine der Strombereitstellungseinheiten ein Energiespeicher, insbesondere ein elektrochemischer Energiespeicher, verwendet wird, wobei der erste Datensatz des Energiespeichers weiterhin eine Verfügbarkeit einer mittels des Energiespeichers gespeicherten elektrischen Energie und/oder eine minimale Kapazität des Energiespeichers und/oder eine maximale Kapazität des Energiespeichers und/oder einen Ladewirkungsgrad des Energiespeichers und/oder eine Verlustrate des Energiespeichers als Information umfasst.

**11.** Verfahren gemäß Anspruch 10, bei dem der Energiespeicher eines elektrischen Fahrzeuges verwendet wird, wobei der erste Datensatz weiterhin eine Verfügbarkeit des elektrischen Fahrzeuges und/oder einen minimalen Energiebedarf zum Betreiben des elektrischen Fahrzeuges als Information umfasst.

**12.** Stromnetz, umfassend

- wenigstens zwei Strombereitstellungseinheiten;
- wenigstens eine Stromverbrauchseinheit; und
- eine Regelvorrichtung zur Regelung eines elektrischen Leistungstransfers zwischen den Strombereitstellungseinheiten und der wenigstens einen Stromverbrauchseinheit; sowie
- zwei erste Datenverbindungen zum Austausch von ersten Datensätzen zwischen den Strombereitstellungseinheiten und der Regelvorrichtung;
- eine zweite Datenverbindung zum Austausch eines zweiten Datensatzes zwischen der wenigstens einen Stromverbrauchseinheit und der Regelvorrichtung; und
- eine Stromtransferleitung zwischen den Strombereitstellungseinheiten und der wenigstens einen Stromverbrauchseinheit zum elektrischen Leistungstransfer; wobei
- die Regelvorrichtung dazu eingerichtet ist, den Leistungstransfer durch ein Verfahren gemäß einem der Ansprüche 1 bis 11 zu regeln.

**13.** Stromnetz gemäß Anspruch 12, wobei jede der Strombereitstellungseinheiten eine Messvorrichtung zum Erfassen wenigstens einer der Informationen des ersten Datensatzes der jeweiligen Strombereitstellungseinheit umfasst und/oder die wenigstens eine Stromverbrauchseinheit wenigstens eine Messvorrichtung zum Erfassen einer der Informationen des zweiten Datensatzes umfasst.

**14.** Stromnetz gemäß einem der Ansprüche 12 oder 13, wobei die wenigstens eine Stromverbrauchseinheit eine Benutzerschnittstelle zur Eingabe der Gewichtung (42) der Strombereitstellungseinheiten umfasst.

**Claims**

**1.** Method for regulating an electrical power transfer between at least two power supply units and at least one power consumption unit, comprising the steps:

- providing a first data set with information regarding a minimum and maximum electrical power which can be supplied for each of the power supply units (S1);
- providing a second data set with information regarding a power requirement of the at least one power consumption unit and a weighting (42) of each of the power supply units (S2);
- providing a target function for a numerical optimization method (S3);

wherein

- the target function includes the information from the data sets and the weightings (42) of the power supply units as parameters, and the weighting (42) numerically weights the power transfers within the target function ; and
- regulating the power transfer by means of an extremalization of the target function (S4),

wherein the power transfers are determined by the extremalization;
**characterized in that**
the weighting (42) of the power supply units is provided by the at least one power consumption unit.

2. Method according to Claim 1, in which meeting the power requirement by way of the power supply units is taken into account as a secondary condition when extremalizing the target function.

3. Method according to Claim 1 or 2, in which the power supply units are weighted (42) according to their form of power generation and/or according to their location.

4. Method according to one of the preceding claims, in which the power supply units are weighted (42) according to their operator.

5. Method according to one of the preceding claims, in which the second data set is further provided with information regarding separable and/or temporally shiftable electrical power.

6. Method according to one of the preceding claims, having at least two power consumption units, in which each of the first data sets is further provided with a weighting of each of the power consumption units, wherein the target function includes the weighting of the power consumption units as a parameter.

7. Method according to Claim 6, in which the power consumption units are weighted according to their form of power consumption and/or according to their location.

8. Method according to Claim 6 or 7, in which the power consumption units are weighted according to their operator.

9. Method according to one of the preceding claims, in which the weightings (42) of the power supply units are provided by a user input.

10. Method according to one of the preceding claims, in which an energy storage device, in particular an electrochemical energy storage device, is used as one of the power supply units, wherein the first data set of the energy storage device further includes as information availability of electrical energy stored by means of the energy storage device and/or a minimum capacity of the energy storage device and/or a maximum capacity of the energy storage device and/or a charging efficiency of the energy storage device and/or a loss rate of the energy storage device.

11. Method according to Claim 10, in which the energy storage device of an electric vehicle is used, wherein the first data set further includes as information availability of the electric vehicle and/or a minimum energy requirement for operating the electric vehicle.

12. Power supply system, comprising

- at least two power supply units;
- at least one power consumption unit; and
- a regulating device for regulating an electrical power transfer between the power supply units and the at least one power consumption unit; as well as
- two first data connections for exchanging first data sets between the power supply units and the regulating device;
- a second data connection for exchanging a second data set between the at least one power consumption unit and the regulating device; and
- a power transfer line between the power supply units and the at least one power consumption unit for electrical power transfer; wherein
- the regulating device is set up to regulate the power transfer by a method according to one of Claims 1 to 11.

13. Power supply system according to Claim 12, wherein each of the power supply units comprises a measuring device for recording at least one piece of information from the first data set of the respective power supply unit and/or the at least one power consumption unit comprises at least one measuring device for recording one piece of information from the second data set.

14. Power supply system according to either of Claims 12 or 13, wherein the at least one power consumption unit comprises a user interface for inputting the weighting (42) of the power supply units.


**Revendications**

1. Procédé de régulation d'un transfert de puissance électrique entre au moins deux unités de mise à disposition de courant et au moins une unité de consommation de courant, comprenant les stades :

   - on se procure un premier ensemble de données ayant une information sur une puissance électrique minimum et maximum pouvant être mise à disposition pour chacune des unités (S1) de mise à disposition de courant ;
   - on se procure un deuxième ensemble de données ayant une information sur un besoin de puissance de la au moins une unité de consommation de courant et une pondération (42) de chacune des unités (S2) de mise à disposition de courant ;
   - on se procure une fonction cible pour un procédé (S3) d'optimisation numérique ;

   dans lequel

   - la fonction cible comprend comme paramètre les informations des ensembles de données et les pondérations (42) des unités de mise à disposition de courant et la pondération (42) à l'intérieur de la fonction cible pondère numériquement le transfert de puissance ;
   - on régule le transfert de puissance au moyen d'une extrémalisation de la fonction (S4) cible,

   dans lequel on détermine les transferts de puissance par l'extrémalisation,
   **caractérisé en ce que**
   on met la pondération (42) des unités de mise à disposition de courant à disposition par la au moins une unité de consommation de courant.

2. Procédé suivant la revendication 1, dans lequel on prend en compte une couverture du besoin de puissance par les unités de mise à disposition de courant comme condition secondaire lors de l'extrémalisation de la fonction cible

3. Procédé suivant la revendication 1 ou 2, dans lequel la pondération (42) des unités de mise à disposition de courant a lieu suivant leur type de production de courant et/ou suivant leur emplacement.

4. Procédé suivant l'une des revendication précédentes, dans lequel la pondération (42) des unités de mise à disposition de courant a lieu suivant leur opérateur.

5. Procédé suivant l'une des revendication précédentes, dans lequel on procure le deuxième ensemble de données en outre avec une information sur des puissances électriques pouvant être séparées et/ou pouvant être décalées dans le temps.

6. Procédé suivant l'une des revendication précédentes, comprenant au moins deux unités de consommation de courant, dans lequel en outre on procure chacun des premiers ensembles de données avec une pondération de chacune des unités de consommation de courant, dans lequel la fonction cible comprend comme paramètre la pondération des unités de consommation de courant.

7. Procédé suivant la revendication 6, dans lequel la pondération des unités de consommation de courant s'effectue suivant leur type de consommation de courant et/ou suivant leur emplacement.

8. Procédé suivant la revendication 6 ou 7, dans lequel la pondération des unités de consommation de courant s'effectue suivant leur opérateur.

9. Procédé suivant l'une des revendication précédentes, dans lequel la mise à disposition des pondérations (42) des unités de mise à disposition des courants a lieu par une entrée d'utilisateur.

**10.** Procédé suivant l'une des revendication précédentes, dans lequel on utilise comme l'une des unités de mise à disposition de courant, un accumulateur d'énergie, notamment un accumulateur d'énergie électrochimique, dans lequel le premier ensemble de données de l'accumulateur d'énergie comprend en outre comme information une disponibilité d'une énergie électrique accumulée au moyen de l'accumulateur d'énergie et/ou une capacité minimum de l'accumulateur d'énergie et/ou une capacité maximum de l'accumulateur d'énergie et/ou un rendement de charge de l'accumulateur d'énergie et/ou un taux de perte de l'accumulateur d'énergie.

**11.** Procédé suivant la revendication 10, dans lequel on utilise l'accumulateur d'énergie d'un véhicule électrique, dans lequel le premier ensemble de données comprend en outre comme information une disponibilité du véhicule électrique et/ou un besoin minimum d'énergie pour faire fonctionner le véhicule électrique.

**12.** Réseau de courant, comprenant

- au moins deux unités de mise à disposition de courant ;
- au moins une unité de consommation de courant ;
- un système de régulation pour la régulation d'un transfert de puissance électrique entre les unités de mise à disposition de courant et la au moins une unité de consommation de courant ; ainsi que
- deux premières liaisons de données pour l'échange d'ensembles de données entre les unités de mise à disposition de courant et le système de régulation ;
- une deuxième liaison de données pour l'échange d'un deuxième ensemble de données entre la au moins une unité de consommation de courant et le système de régulation ;
- une ligne de transfert de courant entre les unités de mise à disposition de courant et la au moins une unité de consommation de courant pour le transfert de puissance électrique ; dans lequel
- le système de régulation est conçu pour réguler le transfert de puissance par un procédé suivant l'une des revendications 1 à 11.

**13.** Réseau de courant suivant la revendication 12, dans lequel chacune des unités de mise à disposition de courant comprend un système de mesure pour la détection d'au moins l'une des informations du premier ensemble de données de l'unité respective de mise à disposition de courant et/ou l'unité de consommation de courant comprend au moins un système de mesure pour la détection de l'une des informations du deuxième ensemble de données.

**14.** Réseau de courant suivant l'une des revendications 12 ou 13, dans lequel la au moins une unité de consommation de courant comprend une interface d'utilisateur pour l'entrée de la pondération (42) des unités de mise à disposition de courant.

# FIG 1

S1

S2

S3

S4

# FIG 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 2908400 A1

- US 2013226484 A1

### In der Beschreibung aufgeführte Nicht-Patentliteratur

- Optimal power scheduling of distributed resources in Smart Grid. **KUMAR DHIVYA SAMPATH et al.** 2013 IEEE INNOVATIVE SMART GRID TECHNOLOGIES-ASIA (ISGT ASIA). IEEE, 10. November 2013